# EUROPEAN PATENT APPLICATION

(11) **EP 2 383 631 A1**
(43) Date of publication of application: **02.11.2011**
(21) Application number: 10161159.8
(22) Date of filing: 27.04.2010
(51) Int. Cl.: G06F 3/01, G06F 3/041

(54) **Hand-held mobile device and method for operating the hand-held mobile device**

(71) Applicant: Sony Ericsson Mobile Communications AB, 221 88 Stockholm (SE)
(72) Inventor: Henricson, Johan, 214 21 Malmö (SE)
(74) Representative: Banzer, Hans-Jörg

(57) **Abstract**

The present invention relates to a hand-held mobile device and a method for operating a hand-held mobile device that provide more realistic haptic feedback to a user, e.g. in response to an operation or in accordance with a displayed event or symbol. The hand-held mobile device comprises a housing; a first vibrating section operable to generate a first vibration; a second vibrating section operable to generate a second vibration; and a controller adapted to control operation of said first vibrating section and said second vibrating section depending on a signal associated with a display device, wherein said first vibrating section and said second vibrating section are spaced-apart from each other at two different positions in said housing.

## Description

### Field of the invention

The present invention relates to a hand-held mobile device and a method for operating the hand-held mobile device, and in particular to a hand-held mobile device that is able to vibrate.

### Background

Various kinds of sensors serving as user interfaces in different devices, such as mobile communication devices, are known in the art for sensing an input action of a user. For example, when using a touch sensor, such as a touch screen device of a hand-held mobile device, the input is performed by touching the sensor surface with a finger or a stylus. Hence, touch sensors may provide a user interface or man-machine interface to control various functions of the device having the touch sensor incorporated therein.

Known touch sensors, which are often combined with liquid crystal displays (LCDs) to form a touch screen device, work by responding to a change in capacitance, resistance or inductance affected by the touch of a finger or a stylus of the user on top of the touch sensor. However, with full touch device, e.g. smart phones, becoming more and more popular, both the benefits and the limitations of such devices are becoming more obvious.

For example, a touch screen of a touch screen device is usually a flat surface and functional buttons or keys are only provided as virtual images displayed by the LCD below the sensor surface so that the user does not feel individual buttons or keys, as in conventional keyboards or keypads. More importantly, the user does not get any haptic feedback from the virtual button he or she presses. Often, the user does not even know whether the virtual button has been pressed at all and whether the function assigned to it has been triggered, since there is no haptic or tangible response and there may be a delay in processing the input command, i.e. the function associated with the virtual button due to processor speed or similar.

In other words, there is a problem in full touch devices with button interaction where input to the device is performed through pressing a virtual button or key. This becomes particularly apparent when inputting text or numbers on a graphic twelve-key keypad, such as a dial pad or soft keyboard. Here, the user may not really see or feel the button he or she presses, since it is hidden by a finger and it may be hard to tell when a button is pressed as there is no haptic feedback from the device.

In state of the art devices, feedback is provided, for example, by changing the image of the virtual button on the screen, e.g. increasing the size of the virtual button. Another form of feedback may be to let the device vibrate, which could be done by a vibration apparatus as commonly used in mobile phones.

However, all these solutions cannot replace the feeling that a user gets from pressing down a real key of a keypad, since changing the size of the image of a virtual button constitutes only optical feedback to the eyes of the user.

Therefore, it is desirable to provide a hand-held mobile device and method for operating a hand-held mobile device that provide more realistic haptic feedback to a user, e.g. in response to an operation or in accordance with a displayed event.

### Disclosure of invention

A novel hand-held mobile device and method for operating a hand-held mobile device are presented in the independent claims. Advantageous embodiments are defined in the dependent claims.

An embodiment of the invention provides a hand-held mobile device comprising a housing, first and second vibrating sections operable to generate first and second vibrations, respectively, as well as a controller. The controller is adapted to control operation of the first vibrating section and the second vibrating section depending on a signal associated with a display device. The first vibrating section and the second vibrating section are spaced apart from each other at two different positions in the housing.

Accordingly, a directional effect of vibration can be generated so as to provide a user with more realistic feedback, in particular haptic feedback in response to an input operation or in accordance with a displayed event. For example, the vibration, in particular the origin of the vibration, may be dependent on a displayed event on a display or a touched position on a touch screen so that more believable physical feedback can be obtained from the behaviour of an item or symbol on the display.

In one embodiment, the controller is adapted to control a first intensity of said first vibration of said first vibrating section and a second intensity of said second vibration of said second vibrating section so that a ratio between said first and second intensities changes depending on a change of said signal. Accordingly, different strengths of vibrations can be generated at different positions in the housing. This enables a user to feel that a specific vibration originates from a specific position, for example. In one embodiment, the display device forms part of the hand-held mobile device to display an image to a user. Accordingly, a user may view images on the hand-held mobile device and vibration can be felt, e.g. by the hand of the user, that is associated with the displayed images.

In one embodiment, the hand-held mobile device further comprises a touch sensitive user interface operable to sense a finger or other input instrument. Accordingly, input operations can be performed via touch input on the hand-held mobile device and a vibration can be generated, the origin of which is felt to be associated with the touched position.

In one embodiment, the controller is adapted to control the first and second vibrating sections so that the combination of the first and second vibrations provide haptic feedback to the hand holding the device or finger or other input instrument on the touch sensitive user interface. Accordingly, the user may be provided with a haptic impression through a vibration.

In one embodiment, the controller is adapted to control the first and second vibrating sections so that the level of the intensity of the first and second vibrations of the first and second vibrating sections depends on the position of the finger or other input instrument touching the touch sensitive user interface. Accordingly, the user may be provided with haptic feedback by vibration which is dependent on the touched position.

In one embodiment, the controller is adapted to control the first and second vibrating sections so that the level of intensity of the first and second vibrations of the first and second vibrating section changes with a change in position of the finger or other input instrument touching the touch sensitive user interface to provide a high level, preferably the highest level, of the intensity at a position in proximity with the position of the finger or other input instrument. Accordingly, the user may be provided with haptic feedback by a vibration, the felt origin of which is changing, i.e. shifting with the touched position.

In one embodiment, the first vibrating section is arranged at one side of the housing and the second vibrating section is arranged at the opposite side of the housing. Accordingly, when the hand-held mobile device is held in the user's hand, directional haptic feedback can be felt by the user, i.e. the user may feel that the top or the bottom of the device vibrates strongest, for example.

In one embodiment, the hand-held mobile device further comprises at least a third and a fourth vibrating section spaced apart from each other and from the first and second vibrating sections at different positions in the housing. Preferably, the four vibrating sections are arranged at four different corners of the housing. Accordingly, the felt origin of vibration can be varied in an area surrounded by the four vibrating sections so that directional haptic feedback can be provided with high spatial resolution.

In one embodiment, the hand-held mobile device further comprises an additional vibrating section arranged substantially in the middle of the housing. Accordingly, good spatial resolution of the origin of haptic feedback can be provided.

In one embodiment, the controller is adapted to control at least two vibrating sections simultaneously at individual intensities, e.g. to provide a haptic impression to a user of an origin of the vibration. Accordingly, haptic feedback can be provided with different intensities at different positions.

In one embodiment, the signal is associated with the position of a symbol displayed on the display device or with the position touched on a touch screen device comprising a touch sensitive user interface and the display device. Accordingly, the felt origin of a vibration can be changed in accordance with images displayed on a display device or in accordance with a touched position.

In one embodiment, the hand-held mobile device is a mobile communication device. Accordingly, a mobile communication device may be provided with a novel type of feedback providing apparatus so that directional haptic feedback can be provided to a user operating the mobile communication device.

Another embodiment of the invention provides a method for operating a hand-held mobile device having a first and a second vibrating section spaced apart from each other at two different positions in a housing. The method comprises the step of controlling a first intensity of a first vibration of said first vibrating section and a second intensity of a second vibration of said second vibrating section depending on a signal associated with a display device so that the combination of said first and second vibrations provide a haptic impression to a user of the origin of the vibration. Accordingly, directional vibration can be generated so as to provide a user with more realistic feedback, in particular haptic feedback in response to an input operation or in accordance with a displayed event.

### Brief description of the drawings

Embodiments of the invention will be described with respect to the following appended figures.
Figure 1 illustrates a hand-held mobile device and elements thereof according to an embodiment of the invention.
Figure 2 illustrates a flow diagram of a method for operating a hand-held mobile device according to an embodiment of the invention.
Figure 3 illustrates a hand-held mobile device and elements thereof according to another embodiment of the invention.
Figures 4a and 4b illustrate an example of an arrangement of vibrating sections and the effect of the arrangement, respectively.

### Description of the embodiments

The further embodiments of the invention are described with reference to the figures. It is noted that the following description contains examples only and should not be construed as limiting the invention.

In the following, similar or same reference signs indicate similar or same elements.

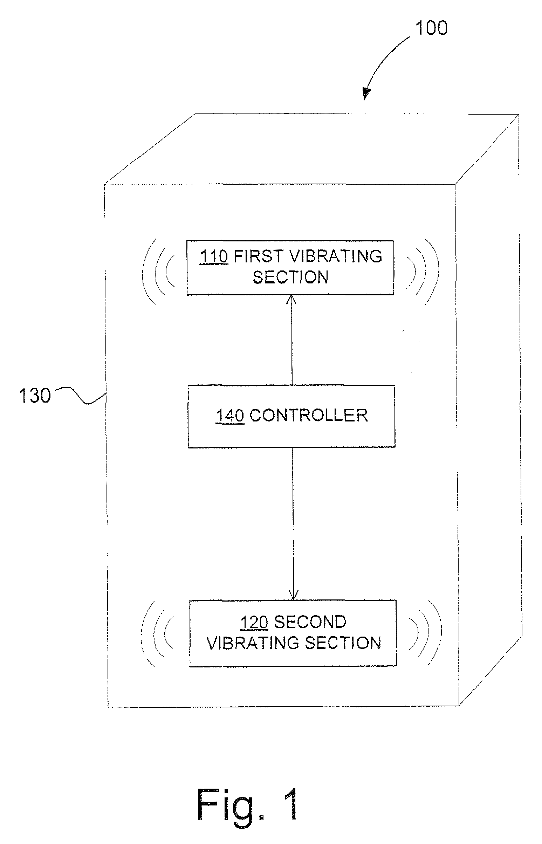

Figure 1 illustrates elements of a hand-held mobile device 100 according to an embodiment of the invention. The hand-held mobile device, in the following simply referred to a mobile device, comprises a housing 130, a first vibrating section 110, a second vibrating section 120 and a controller 140.

The first vibrating section 110 and the second vibrating section 120 are spaced apart from each other at two different positions in the housing 130. As shown in Figure 1, the first vibrating section 110 is arranged at one side of the housing 130, the top side, and the second vibrating section 120 is arranged at the opposite side of the housing 130, i.e. the bottom side. Several other arrangements of the vibrating sections are possible and this arrangement is only described for illustrative purposes.

The first vibrating section 110 is able to generate a first vibration, i.e. a vibration with a first intensity. The second vibrating section 120 is able to generate a second vibration, i.e. a vibration with the second intensity. By using the first and second vibrating sections, the hand-held mobile device is adapted to generate a mechanical force to provide haptic feedback to a user, wherein haptic feedback can be understood as the effect of vibration sensed by a user, e.g. by his/her hand or finger, and may also be called tactile feedback.

The extent of the haptic feedback felt by the user depends largely on the intensity of the vibration. The intensities of the vibrating sections may be different, whereas the individual vibrating sections can be controlled in a number of ways to generate the vibration intensity. For example, the vibration intensity may be controlled by time, e.g. in a continuous span, by frequency, e.g. in a continuous span, or by having different counterweights on different axes or on the same axis with the possibility of coupling one or more counterweights to the axis.

A vibrating section may be any suitable vibrator apparatus, such as a vibrator apparatus commonly used for mobile phones. Such vibrator apparatuses are often used with a rather large counterweight to run at approximately 9,000 rpm (revolutions per minute) and produce an easily detectable vibration effect at approximately 150Hz. Other types of vibrators include piezoelectric element which may be advantageous in providing a directed acoustic wave, i.e. directional vibration, more efficiently.

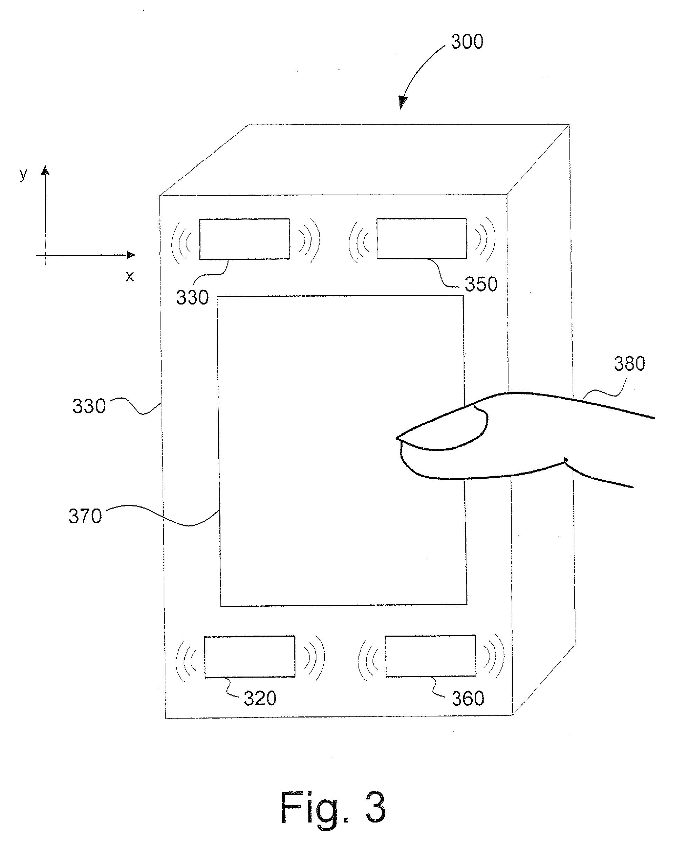

The controller 140 controls the operation of the first vibrating section 110 and the second vibrating section 120 depending on a signal. The signal is associated with a display device. For example, the display device forms part of the mobile device to display an image to the user, as will be described in more detail later with respect to Figure 3. In this case, the mobile device may be a mobile communication device, such as a mobile phone or cellular phone or PDA (personal digital assistant) or other multi-media device, such as an MP3-player. Alternatively, the display device may not form part of the hand-held mobile device but may be an external display device, and the hand-held mobile device may be a game controller, for example. A game controller that is to be held by two hands, in which on both sides held a vibrating section is provided, may be one example.

When the mobile device 100 is provided with a touch sensitive user interface, such as a touch sensor, similar to the example of Fig. 3 described below, the controller 140 may be adapted to control the first and second vibrating sections 110, 120 so that the combination of the first and second vibrations provides haptic feedback to the hand holding the mobile device or finger or other input instrument touching the touch sensitive user interface.

More specifically, the controller 140 may be adapted to control the first and second vibrating sections 110, 120 so that the level of the intensity of said first and second vibrations of said first and second vibrating sections 110, 120 depends on the position of the finger or other input instrument touching said touch sensitive user interface.

The controller 140 may also control the first and second vibrating sections 110, 120 so that the level of the intensity of said first and second vibrations of said first and second vibrating sections changes with a change in position of the finger or other input instrument touching said touch sensitive user interface to provide a high level, preferably highest level, of the intensity at a position in proximity with the position of the finger or other input instrument. In other words, the vibrating section are controlled so that the pressure waves transmitted therefrom interfere constructively close to the position touched.

The signal instructing the controller 140 may be a signal sent from the display device and received at the controller 140 that is associated with an event or symbol displayed on the display device. The symbol may be a pointer symbol movable by a computer mouse or track ball.

In one example, the first and second vibrating sections may be positioned on the left and the right side of the mobile device, respectively, and a vehicle displayed on the display device may drive from the left to the right side so that a controller of the vibrating sections may control the vibrating sections to vibrate according to the movement of the car. Namely, at a first instant only the vibrating section on the left side vibrates and then when the car slowly moves to the right side, the vibrating section on the right side vibrates together with the vibrating section on the left side and finally, when the car arrives at the right side, only the vibrating section at the right side vibrates.

In another example, a user may scroll down a list of addresses or telephone numbers, such as a contact list in a mobile phone, and when the list starts scrolling down, a vibrating section placed on the top, such as the first vibrating section 110, may be activated and once the end of the list is reached at the bottom of the display device, the second vibrating section vibrates. Preferably, a combination of the vibration of the first and second vibrating section is controlled so that there is a feeling to the user holding the mobile device in his/her hand that the origin of the vibration, the combination of the first and second vibration, is felt to be moving from the top to the bottom in accordance with the movement of the displayed list. When reaching the button of the list, a feeling imitating a physical "bump" may be provided in order to be believable and feel natural. It is also possible to mimic at bouncing effect, for example by a repetitive bumping by increasing and decreasing the intensity of a vibrating section.

In another example, a touch sensitive user interface may be combined with the display device to constitute the touch screen device and the signal may indicate to the controller where the touch sensitive user interface has been touched so as to control the vibrating sections to provide a vibration which the user associates with the position touched. In other words, the first and second vibrations of the vibration sections are controlled to interfere in such a way that the strongest intensity of the combined vibration comes from the position which is touched.

With reference to the hand-held device in Figure 1, for example, the controller 140 is adapted to control the first intensity of the first vibration of the first vibrating section 110 and the second intensity of the second vibration of the second vibrating section 120 so that a ratio between the first and the second intensities changes depending on a change of the signal.

For example, this is the case, when a list is displayed on a display device provided on the mobile device and the user touches the top of the list and moves the finger down on the display device to scroll down the list, wherein this movement of the finger is detected by a touch sensitive user interface providing a signal to the controller indicating the movement from the top to the bottom so that in accordance with this movement the intensities of the first and second vibrating sections 110, 120 are varied. In particular, the intensities are varied in such a way that, when the finger is located at the top, the first vibrating section 110 vibrates and the further down the finger moves, the more the intensity of the first vibrating section 110 decreases and the intensity of the vibration of the second vibrating section 120 increases.

Here, the position touched is associated with the signal indicating this position to the controller. Accordingly, the hand holding and the finger touching the mobile device feel the change in vibration and the user gets the impression that the origin of the vibration changes position in accordance with the finger.

This example is clearly not limiting to a hand-held mobile device with a touch sensitive user interface, since a displayed list can also be scrolled down using a jog dial, a joystick or other physical buttons and the positional change of the vibration may be felt by the user's hand holding the mobile device.

Another example in which haptic feedback is not necessarily provided to a finger of the user operating the mobile device but to the hand of the user holding the mobile device is for example when flinging a list and then lifting the finger from the touch sensitive user interface, in which case the list will typically continue scrolling until it reaches its end. Once it reaches the end, for example the lower part of the display, the vibrating section at the bottom of the mobile device will vibrate strongest.

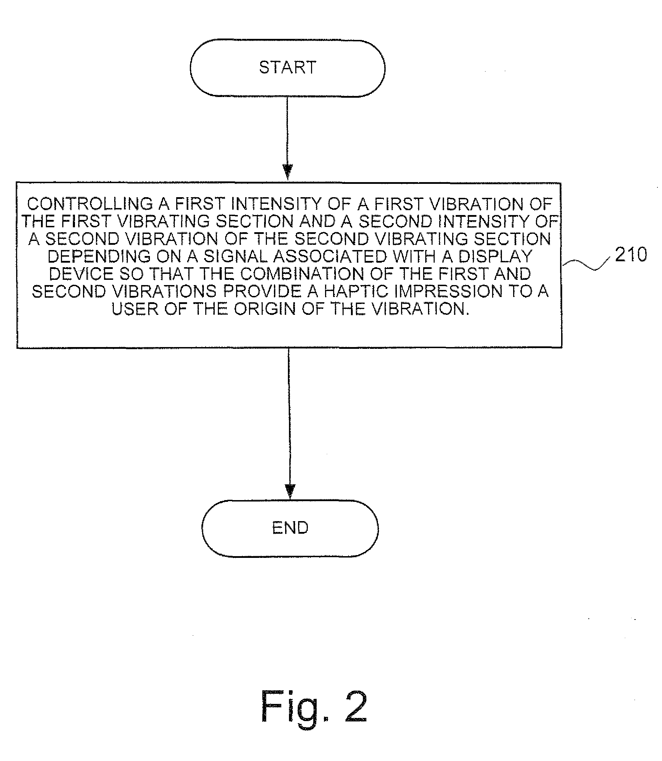

In the following, operations of a method for operating a hand-held mobile device, such as the hand-held mobile device 100, will be described with respect to Figure 2.

The hand-held mobile device may have a first and a second vibrating section spaced apart from each other to two different positions and in a first step 210 a first intensity of a first vibration of the first vibrating section and a second intensity of a second vibration of a second vibrating section are controlled depending on a signal associated with the display device so that the combination of the first and second vibrations provide a haptic impression to a user of the origin of the vibration.

In more detail, a preceding step may be provided, namely detecting a movement of a displayed symbol, object or the like, or of a position touched, wherein subsequently a signal indicating the movement is sent to the controller which then carries out the above-mentioned first step 210.

To obtain a suitable combination of vibrations from different vibrating sections, the controller simultaneously controls the individual intensities of the vibrations. It is understood that the higher the number of the vibrating sections, the easier it is to obtain a good position resolution of the felt origin of the vibration.

In the following, a more detailed example of a hand-held mobile device is described with respect to Figure 3. In Figure 3 the hand-held mobile device 300 comprises a housing 330, a first vibrating section 310, a second vibrating section 320, a third vibrating section 350, a fourth vibrating section 360 and a touch screen device 370 comprising a display device and a touch sensitive user interface. The hand-held mobile device 300 further comprises a controller which is not shown in the Figure but is similar to the controller 140 and its previously described functions.

A finger 380 is shown for illustration in Figure 3 which touches the touch screen device. It is understood that there are several other ways of operating a touch screen device, namely other input instruments could be used, such as a stylus.

As mentioned before, a touch screen device comprises a display device to display an image to a user and a touch sensitive user interface operable to sense a finger or other input instrument. Similar to the mobile device 100, the controller of the mobile device 300 may be adapted to control the first to fourth vibrating sections so that the combination of the first to fourth vibrations provide haptic feedback to the hand holding the mobile device or finger on the touch sensitive user interface 370. The controller may be further adapted to control the first to fourth vibrating sections so that the level of the intensity of the first two force vibrations of the vibrating sections depends on the position of the finger 380 touching the touch sensitive user interface 370.

As shown in Figure 3, the finger 380 touches a position on the right side of the touch screen device 370 slightly closer to the bottom than to the top of the mobile device 300. This position can be detected by the touch sensitive user interface of the touch screen device 370 and information regarding this position is provided to the controller by the above-described signal.

Accordingly, the controller controls in this example the vibrating sections simultaneously at individual intensities so as to provide a haptic impression to a user of an origin of the vibration corresponding to the position touched. In detail, for the touched position illustrated, the four vibrating sections may be controlled such that the intensity of the first and the second vibrating sections 310, 320 are roughly zero and the intensity of the fourth vibrating section 360 is slightly higher than the one of the third vibrating section 350.

As described above, the mobile device 300 comprises the first to fourth vibrating sections spaced apart from each other at different positions in the housing. For example, as shown in Figure 3, the four vibrating sections are arranged at four different corners of the housing 330.

In Figure 3, the vibrating sections are shown to be spaced apart from the touch screen device 370 in the x, y-directions. However, this has been done only for illustrative purposes, and it is clear that very good results can be achieved when the display device of the touch screen device overlies the vibrating sections, i.e. being higher up in the z-direction extending over the vibrating sections so that the vibrating sections are located underneath the touch screen device.

Similar to the above-described example of scrolling a list up and down, the four vibrating sections 310, 320, 350 and 360 not only allow directional haptic feedback in the vertical direction (up and down) but also in the horizontal direction (left and right). In particular, the controller of the mobile device 300 may be adapted to control the four vibrating sections so that the level of the intensity of the four vibrations of the four vibrating sections 310, 320, 350 and 360 changes with a change in position of the finger touching the touch screen device 370, sensed by the touch sensitive user interface, to provide the highest level of the intensity at the position in proximity with the position of the finger.

It is understood that the invention is not limited to two or four vibrating sections. For example five vibrating sections may be used, one in each corner of the display device, which corresponds in Figure 3 to each corner of the housing and one in the middle, which would correspond in Figure 3 to roughly the center of the display device, and the user could be provided with a sense of where on a display device something happens. On larger display devices, for example mobile devices that can be held by two hands, such as touch pads, tablet PCs or netbooks, even more vibrating sections may be used, for example 25 in some giant mobile devices compared to two in budget low-end devices. Therefore, a good haptic resolution can be obtained.

Different kinds of events may have different points of origin, such as pressing different keys of a virtual graphic 12-key display so that the origin of vibration changes accordingly.

Additionally, points of origin may also be provided to other events, such as the indication of the arrival of a new message or that the end of a list is reached while scrolling.

Referring to the example of a hand-held mobile device with five vibrators, the user presses a button at the upper left corner (coordinates X, Y=0,0), for example, then only the upper left vibrating section would buzz briefly to give the feeling of haptic feedback originating from the upper left corner. Further, if another button, e.g. at the middle of the display device, is pressed, the vibrating section at the center buzzes to indicate this. Still further, if a third button, e.g. located between the previous two, is pressed, both of the vibrating sections, namely the one of the upper left corner and the one in the center buzz at a slightly lower intensity than before while the others remain inactive to give the impression of the event occurring somewhere in between the upper left corner and the center of the display device.

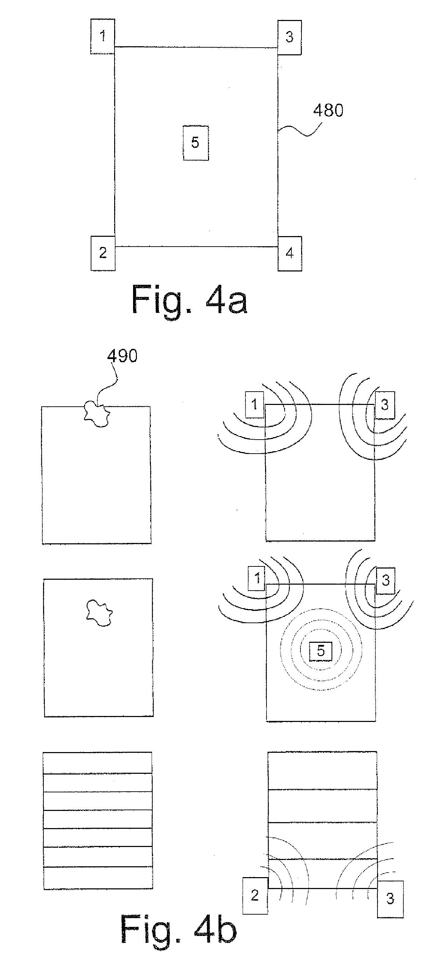

Figures 4a and 4b illustrate an example of an arrangement of five vibrating sections at a touch screen device 480, see Fig. 4a, and the effect producible by the arrangement, see Fig. 4b, wherein on the left side of Figure 4b a touched position 490 is indicated and on the right side the corresponding vibration control. In detail, five vibrating sections 1 to 5 are illustrated.

In the first example, a position 490 at the top in the center is touched and only the first and the third vibrating section vibrate with roughly half their intensity (50%). In the second example, the first, third and fifth vibrating sections vibrate at roughly half their intensity.

In the last example at the bottom of Figure 4b, scrolling of a list is shown on the left side, wherein when the end of the list is reached, the second and third vibrating sections vibrate at full intensity (100%) as seen on the right side.

It should be understood that the invention is not limited to provide only one origin of the vibration, but also multi-touch cases, e.g. two touched positions, can be handled, in which there may be two positions on a display that provide a higher vibration intensity than the other positions on the display. It is understood that particularly in the multi-touch case a larger number of vibrating sections is desirable.

As described above, the controller controls the vibrating sections of the mobile hand-held devices 100 and 300. It should be understood that the controller is not limited to an individual structural unit but the functions thereof could be also distributed. The controller may be any kind of a processing device, e.g. a integrated circuit, processor, microprocessor or CPU running software that may be stored on a separate but connected memory storing code relating to the operation and control of the mobile device. The code may include instructions such that, when the code is executed, operations to control the functions of the controller are carried out, e.g. determining a touched position and accordingly controlling the vibration sections to provide a vibration in accordance with the touched position. For example, the functions of the controllers herein described may be incorporated in a controller of a mobile phone, such as a smart phone.

Therefore, it should be understood that particularly the functions of the controller may be implemented in hardware, software, field-programmable gate arrays (FPGAs), application-specific integrated circuits (ASICs), firmware or the like.

It will be apparent that various modifications and variations can be made in the described elements, hand-held mobile devices and methods as well as in the construction of this invention without departing from the scope or spirit of the invention. The invention has been described in relation to particular embodiments which are intended in all aspects to be illustrative rather than restrictive. Those skilled in the art will appreciate that many different combinations of hardware, software and firmware are suitable for practicing the invention.

Moreover, other implementations of the invention will be apparent to the skilled person from consideration of the specification and practice of the invention disclosed herein. It is intended that the specification and the examples are considered as exemplary only. To this end, it is to be understood that inventive aspects may lie in less than all features of a single foregoing disclosed implementation or configuration. To this end, the true scope and spirit of the invention is indicated by the following claims.

## Claims

1. Hand-held mobile device, comprising
a housing;
a first vibrating section operable to generate a first vibration;
a second vibrating section operable to generate a second vibration; and
a controller adapted to control operation of said first vibrating section and said second vibrating section depending on a signal associated with a display device;
wherein said first vibrating section and said second vibrating section are spaced-apart from each other at two different positions in said housing.

2. Hand-held mobile device of claim 1, wherein said controller is adapted to control a first intensity of said first vibration of said first vibrating section and a second intensity of said second vibration of said second vibrating section so that a ratio between said first and second intensities changes depending on a change of said signal.

3. Hand-held mobile device of claim 1 or 2, wherein said
display device forms part of said hand-held mobile device to display an image to a user.

4. Hand-held mobile device of claim 1, 2 or 3, further comprising
a touch sensitive user interface operable to sense a finger or other input instrument.

5. Hand-held mobile device of claim 4, wherein said controller is adapted to control said first and second vibrating sections so that the combination of said first and second vibrations provides haptic feedback to the hand or finger or other input instrument on said touch sensitive user interface.

6. Hand-held mobile device of claim 4 or 5, wherein said controller is adapted to control said first and second vibrating sections so that the level of the intensity of said first and second vibrations of said first and second vibrating sections depends on the position of the finger or other input instrument touching said touch sensitive user interface.

7. Hand-held mobile device of claim 4 or 5, wherein said controller is adapted to control said first and second vibrating sections so that the level of the intensity of said first and second vibrations of said first and second vibrating sections changes with a change in position of the finger or other input instrument touching said touch sensitive user interface to provide a highest level of the intensity at a position in proximity with the position of the finger or other input instrument.

8. Hand-held mobile device of one of claims 1 to 7, wherein said first vibrating section is arranged at one side of said housing and said second vibrating section is arranged at the opposite side of said housing.

9. Hand-held mobile device of one of claims 1 to 8, further comprising at least a third and a fourth vibrating section spaced-apart from each other and from said first and second vibrating sections at different positions in said housing.

10. Hand-held mobile device of claim 9, wherein the four vibrating sections are arranged at four different corners of said housing.

11. Hand-held mobile device of one of claims 1 to 10, further comprising an additional vibrating section arranged substantially in the middle of said housing.

12. Hand-held mobile device of one of claims 1 to 11,
wherein said controller is adapted to control at least two vibrating sections simultaneously at individual intensities to provide a haptic impression to a user of an origin of the vibration.

13. Hand-held mobile device of one of claims 4 to 12,
wherein said signal is associated with a position of a symbol displayed on said display device or with a position touched on a touch screen device comprising said touch sensitive user interface and said display device.

14. Hand-held mobile device of one of claims 1 to 13,
wherein said hand-held mobile device is a mobile communication device.

15. Method for operating a hand-held mobile device having a first and a second vibrating section spaced-apart from each other at two different positions in a housing, comprising the step
controlling a first intensity of a first vibration of said first vibrating section and a second intensity of a second vibration of said second vibrating section depending on a signal associated with a display device so that the combination of said first and second vibrations provide a haptic impression to a user of the origin of the vibration.
